(19) **Europäisches Patentamt / European Patent Office / Office européen des brevets**

(11) **EP 4 531 448 A1**

(12) **EUROPEAN PATENT APPLICATION**
published in accordance with Art. 153(4) EPC

(43) Date of publication:
**02.04.2025 Bulletin 2025/14**

(21) Application number: **23845255.1**

(22) Date of filing: **03.07.2023**

(51) International Patent Classification (IPC):
**H04W 24/08** (2009.01)

(52) Cooperative Patent Classification (CPC):
**H04B 17/345; H04W 24/08; H04W 24/10**

(86) International application number:
**PCT/CN2023/105549**

(87) International publication number:
**WO 2024/022042 (01.02.2024 Gazette 2024/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.07.2022 CN 202210906139**

(71) Applicant: **ZTE Corporation**
**Shenzhen, Guangdong 518057 (CN)**

(72) Inventors:
- **XI, Zhicheng**
  **Shenzhen, Guangdong 518057 (CN)**
- **LIN, Wei**
  **Shenzhen, Guangdong 518057 (CN)**
- **XU, Xiaojing**
  **Shenzhen, Guangdong 518057 (CN)**
- **RUI, Hua**
  **Shenzhen, Guangdong 518057 (CN)**

(74) Representative: **Savi, Massimiliano et al**
**Notarbartolo & Gervasi S.p.A.**
**Viale Achille Papa, 30**
**20149 Milano (IT)**

(54) **INTERFERENCE DETECTION METHOD AND APPARATUS, AND ELECTRONIC DEVICE AND STORAGE MEDIUM**

(57)    The embodiments of the present application provide an interference detection method and apparatus, and an electronic device and a computer-readable storage medium. The method comprises: collecting signal data of a resource block according to a preset time interval; performing multi-level detection processing according to the signal data to obtain a multi-level interference detection result; and obtaining a comprehensive interference detection result according to the multi-level interference detection result, wherein the multi-level detection processing comprises: performing perception processing according to first signal data to obtain first perception data; performing aggregation processing on a plurality of pieces of first signal data and a plurality of pieces of corresponding first perception data according to the length of a data window to obtain second signal data and second perception data; and obtaining an interference detection result according to the second signal data and the second perception data.

FIG. 2

**Description**

**CROSS-REFERENCE TO RELATED APPLICATION**

This application is filed on the basis of Chinese patent application No. 202210906139.7 filed July 29, 2022, and claims priority to the Chinese patent application, the entire contents of which are incorporated herein by reference.

**TECHNICAL FIELD**

The present disclosure relates to the technical field of communication, and more particularly, to an interference detection method and apparatus, an electronic device, and a computer-readable storage medium.

**BACKGROUND**

Interference is a significant issue faced by wireless networks. With the continuous construction of various wireless networks, various potential interference sources are emerging at an alarming speed, and wireless networks are facing complex interference environment. The occupation of existing frequency resources of other networks by non-standard products, improper network configuration of operators, transmitter problems, spectrum resource overlapping, deliberate interference, and the like are causes of interference in wireless networks. Network operators aim to optimize network performance and improve communication quality through interference identification. How to improve the accuracy of interference detection to adapt to a complex network environment is a pressing technical challenge that needs to be addressed.

**SUMMARY**

Embodiments of the present disclosure provide an interference detection method and apparatus, an electronic device, and a computer-readable storage medium, to more flexibly and accurately detect types of interference in a wireless environment.

In accordance with a first aspect of the present disclosure, an embodiment provides an interference detection method, including:

collecting signal data of a Resource Block (RB) according to a preset time interval and a first dimension;

performing a plurality of stages of detection processing according to the signal data to obtain interference detection results of the plurality of stages; and

obtaining a comprehensive interference detection result according to the interference detection results of the plurality of stages,

where the plurality of stages of detection processing each include:

performing sensing processing according to first signal data to obtain first sensing data, where the first signal data is obtained according to the collected signal data or by performing down-sampling processing on second signal data obtained by a previous stage of detection processing;

performing aggregation processing on a plurality of pieces of first signal data and a plurality of pieces of first sensing data corresponding to the plurality of pieces of first signal data according to a data window length to obtain second signal data and second sensing data; and

obtaining an interference detection result according to the second signal data and the second sensing data.

In accordance with a second aspect of the present disclosure, an embodiment provides an interference detection apparatus, including:

a data collecting unit, configured for collecting signal data of an RB according to a preset time interval and a first dimension;

a multi-stage detection unit, configured for performing a plurality of stages of detection processing according to the signal data to obtain interference detection results of the plurality of stages; and

a comprehensive decision unit, configured for obtaining a comprehensive interference detection result according to the interference detection results of the plurality of stages,

where the multi-stage detection unit includes N stages of detection sub-units, N is an integer greater than 1, and each of the N stages of detection sub-units is further configured for: performing sensing processing according to first signal data to obtain first sensing data, where the first signal data is obtained according to the collected signal data or by performing down-sampling processing on second signal data obtained by a previous stage of detection processing; performing aggregation processing on a plurality of pieces of first signal data and a plurality of pieces of first sensing data corresponding to the plurality of pieces of first signal data according to a data window length to obtain second signal data and second sensing data; and obtaining an interference detection result according to the second signal data and the second sensing data.

In accordance with a third aspect of the present disclosure, an embodiment provides an electronic device, including:

a processor and a memory,

where the memory stores program instructions which, when executed by the processor, causes the processor to perform the method in accordance with the first aspect.

In accordance with a fourth aspect of the present disclosure, an embodiment provides a computer-readable storage medium, storing program instructions which, when executed by a computer, cause the computer to perform the method in accordance with the first aspect.

In accordance with a fifth aspect of the present disclosure, an embodiment provides a computer program product, storing computer instructions which, when executed by a computer, cause the computer to perform the method in accordance with the first aspect.

In the embodiments of the present disclosure, first, signal data of an RB is collected according to a preset time interval and a first dimension. Then, a plurality of stages of detection processing are performed according to the signal data. The plurality of stages of detection processing each include: performing sensing processing according to first signal data to obtain first sensing data, where the first signal data is obtained according to the collected signal data or by performing down-sampling processing on second signal data obtained by a previous stage of detection processing; performing aggregation processing on a plurality of pieces of first signal data and a plurality of pieces of first sensing data corresponding to the plurality of pieces of first signal data according to a data window length to obtain second signal data and second sensing data; and obtaining an interference detection result according to the second signal data and the second sensing data. Through the plurality of stages of detection processing, interference detection results of the plurality of stages can be obtained. Finally, a comprehensive interference detection result is obtained according to the interference detection results of the plurality of stages. In the embodiments of the present disclosure, a multi-stage detection processing architecture is used, and the scale of the architecture can be flexibly configured in practical applications. Because data used for each stage of detection processing is based on collected data or data obtained by down-sampling processing in a previous stage, the result of each stage of detection processing can reflect a detection result of a different time granularity, thereby improving the accuracy of the interference measurement result.

## BRIEF DESCRIPTION OF DRAWINGS

FIG. 1 is a schematic architectural diagram of a communication system to which embodiments of the present disclosure are applicable;

FIG. 2 is a schematic flowchart of an interference detection method according to an embodiment of the present disclosure;

FIG. 3 is a schematic flowchart of each stage of detection processing according to an embodiment of the present disclosure;

FIG. 4 is a diagram of a multi-stage interference detection processing architecture according to an embodiment of the present disclosure;

FIG. 5 is a schematic flowchart of sensing processing according to an embodiment of the present disclosure;

FIG. 6 is a schematic flowchart of acquiring a Received Signal Strength Indicator (RSSI) threshold according to an embodiment of the present disclosure;

FIG. 7 is a schematic flowchart of acquiring an interference detection result according to an embodiment of the present disclosure;

FIG. 8 is a schematic flowchart of interference detection processing when signal data is an RSSI according to an embodiment of the present disclosure;

FIG. 9 is another schematic flowchart of sensing processing according to an embodiment of the present disclosure;

FIG. 10 is another schematic flowchart of acquiring an interference detection result according to an embodiment of the present disclosure;

FIG. 11 is a schematic flowchart of down-sampling processing according to an embodiment of the present disclosure;

FIG. 12 is a schematic flowchart of interference detection processing when signal data is a covariance matrix according to an embodiment of the present disclosure;

FIG. 13 is a schematic structural diagram of an interference detection apparatus according to an embodiment of the present disclosure;

FIG. 14 is a schematic structural diagram of a detection sub-unit according to an embodiment of the present disclosure; and

FIG. 15 is a schematic structural diagram of an electronic device according to an embodiment of the present disclosure.

## DETAILED DESCRIPTION

To make the objects, technical schemes, and advantages of the present disclosure clear, the present disclosure is described in further detail with reference to accompanying drawings and embodiments. It should be understood that the specific embodiments described herein are merely used for illustrating the present disclosure, and are not intended to limit the present disclosure.

It should be understood that in the description of the embodiments of the present disclosure, the terms such as "first", "second" and the like used herein are merely used for distinguishing technical features, and are not intended to indicate or imply relative importance, or implicitly point out the number of the indicated technical features, or implicitly point out a precedence order of the indicated technical features. The term "at least one" means one or more, and the term "a plurality of" means two or more. The term "and/or" is used for describing an association between associated objects and representing that three associations may exist. For example, "A and/or B" may indicate that only A exists, only B exists, and both A and B exist, where A and B may be singular or plural. The character "/" generally indicates an "or" relation between the associated objects. "At least one of" and similar expressions refer to any combination of items listed, including one item or any combination of a plurality of items. For example, at least one of a, b and c may represent a, b, c, "a and b", "a and c", "b and c", or "a, b, and c", where a, b, and c may be singular or plural.

In addition, the technical features involved in various embodiments of the present disclosure described below can be combined with each other if not in collision.

An interference detection method provided in the embodiments of the present disclosure may be applied to various communication systems, e.g., to at least one of the following systems: a Global System for Mobile Communications (GSM) or any other 2nd generation cellular communication system, a Universal Mobile Telecommunications System (UMTS) based on basic Wideband Code Division Multiple Access (W-CDMA), a High-Speed Packet Access (HSPA) system, a Long Term Evolution (LTE) system, an LTE Advanced (LTEA) system, an IEEE 802.11-based system, an IEEE 802.15-based system, and/or a 5th generation (5G) mobile or cellular communication system; and future mobile communication systems. However, the embodiments are not limited to the systems given by the above examples, and those having ordinary skills in the art can apply the present scheme to other communication systems having necessary attributes.

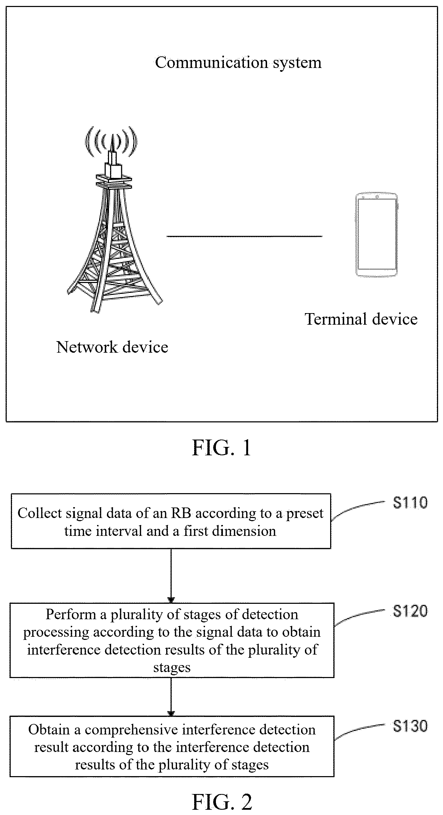

FIG. 1 is a schematic architectural diagram of a communication system to which embodiments of the present disclosure are applicable. The communication system in FIG. 1 includes a plurality of communication devices, which may wirelessly communicate with each other using air interface resources. The communication device includes at least one network device and at least one terminal device. Wireless communication between the communication devices include: wireless communication between a network device and a terminal device, wireless communication between network devices, or wireless communication between terminal devices.

The network device in the example of FIG. 1 may also be referred to as a base station. The base station may be an Evolutional Node B (eNB or eNodeB) in LTE or LTEA, a base station device in a 5G network, or a base station in a future communication system, etc. The base station may include various macro base stations, micro base stations, home base stations, radio remote units, routers, Reconfigurable Intelligent Surfaces (RISs), Wireless Fidelity (WI-FI) devices, primary cells, secondary cells, and network-side devices, and may also be a Location Management Function (LMF) device. This is not limited in the embodiments of the present disclosure.

The terminal device in the example of FIG. 1 is a device with a wireless transceiver function, which may be deployed on land, including indoor or outdoor, handheld, wearable, or vehicle-mounted forms; deployed on the water (such as ships, etc.); or deployed in the air (such as airplanes, balloons, and satellites, etc.). The terminal device may be a mobile phone, a tablet computer (Pad), a computer with a wireless transceiver function, a Virtual Reality (VR) terminal, an Augmented Reality (AR) terminal, a wireless terminal in industrial control, a wireless terminal in self driving, a wireless terminal in remote medical, a wireless terminal in smart grid, a wireless terminal in transportation safety, a wireless terminal in smart city, a wireless terminal in smart home, etc. The application scenarios are not limited in the embodiments of the present disclosure. The terminal device may also be referred to as a user, a User Equipment (UE), an access terminal device, a UE unit, a UE station, a mobile site, a mobile station, a remote station, a remote terminal device, a mobile device, a UE terminal, a wireless communication device, a UE agent, a UE device, etc., which is not limited in the embodiments of the present disclosure.

One possible application scenario of the embodiments of the present disclosure is uplink transmission, i.e., a terminal device sends a signal to a base station. The signal sent by the terminal device includes, but not limited to, a Demodulation Reference Signal (DMRS), a Channel-State Information reference signal (CSI-RS), a Channel-State Information-Interference Measurement (CSI-IM), a Sounding Reference Signal (SRS), a Positioning Reference Signal (PRS), a Synchronization Signal and Physical Broadcast Channel (PBCH) Block (SSB), and a Physical Broadcast Channel (PBCH). The base station may configure a reference signal to be sent for the terminal device in advance by signaling, such that after receiving the reference signal sent by the terminal device, the base station may calculate a signal interference status on a communication channel during communication of the base station with the terminal device, so as to eliminate interference generated using the calculated signal interference status during actual data signal transmission. It should be noted that the embodiments of the present disclosure may be applied to a downlink transmission scenario where a base station sends a signal to a terminal device, which is not limited in the embodiments of the present disclosure. The embodiments of the present disclosure will be described below using an uplink transmission scenario where a terminal device sends a signal to a base station as an example.

The communication system described above is for the purpose of illustrating the technical schemes of the embodiments of the present disclosure clearly, which does not constitute a limitation on the technical schemes provided in the embodiments of the present disclosure. Those having ordinary skills in the art may know that with the evolution of the system architecture and the emergence of new service scenarios, the technical schemes provided in the embodiments of the present disclosure are also applicable to similar communication systems.

FIG. 2 is a schematic flowchart of an interference detection method according to an embodiment of the present disclosure. The method includes the following steps.

In a step of S110, signal data of an RB is collected according to a preset time interval and a first dimension.

In the embodiments of the present disclosure, the signal data of the RB is collected according to the preset time interval. In an example, signal data is collected every K symbols, where K is an integer greater than or equal to 1. The symbol described herein is a time unit in a subframe, frame, or slot, and may be, for example, an Orthogonal Frequency Division Multiplexing (OFDM) symbol, a Single-Carrier Frequency Division Multiple Access (SC-FDMA) symbol, or an Orthogonal Frequency Division Multiple Access (OFDMA) symbol. In another example, signal data is collected every M slots, where M is an integer greater than or equal to 1. The slot described herein may be a slot or a mini slot. A slot or mini slot includes at least one symbol. The time interval described in the embodiments of the present disclosure may also be a time unit such as second, minute, etc., which is not particularly limited in the embodiments of the present disclosure.

The first dimension described in the embodiments of the present disclosure is a dimension of signal data of the RB collected each time. For example, signal data of 273 RBs is collected on symbol i according to the preset time interval under a bandwidth of 100 MHz of a 5G NR uplink system, i.e., a dimension of the obtained signal data of the RBs is 273*1 (i.e., the first dimension).

In a step of S120, a plurality of stages of detection processing are performed according to the signal data to obtain interference detection results of the plurality of stages.

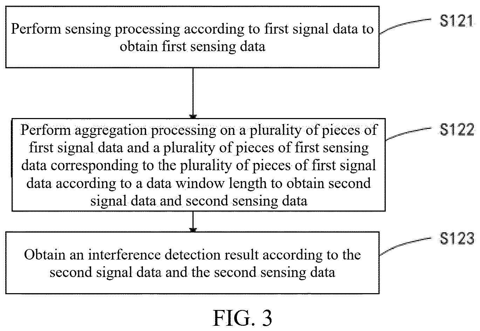

FIG. 3 is a schematic flowchart of each stage of detection processing according to an embodiment of the present disclosure, including the following steps.

In a step of S121, sensing processing is performed according to first signal data to obtain first sensing data, where the first signal data is obtained according to the collected signal data or by performing down-sampling processing on second signal data obtained by a previous stage of detection processing.

It can be understood that the first signal data represents input data of each stage of detection processing. Input data of a first stage of detection processing is the signal data of the RB collected in S110. Input data of each of a second stage of detection processing to a last stage of detection processing is data obtained by performing down-sampling processing on second signal data obtained by a previous stage of detection processing.

It can be understood that for each stage of detection processing, after the first signal data is acquired, sensing processing is performed on the first signal data to obtain corresponding first sensing data. A dimension of the first sensing data is consistent with the dimension of the first signal data. The first sensing data is used for reflecting an interference degree of each RB in the first signal data.

In some examples, the sensing processing includes cluster sensing, neural network sensing, and other processing modes. A specific processing procedure will be described in detail in specific examples below.

In a step of S122, aggregation processing is performed on a plurality of pieces of first signal data and a plurality of pieces of first sensing data corresponding to the plurality of pieces of first signal data according to a data window length to obtain second signal data and second sensing data.

The data window length may be understood as a time granularity corresponding to the second signal data and the second sensing data. For example, the data window length is set to L. Each piece of first signal data and each piece of first sensing data which are inputted are stored and maintained, until L pieces of first signal data and L pieces of first sensing data are stored. The L pieces of first signal data are aggregated to form second signal data, and the L pieces of first sensing data are aggregated to form second sensing data. A dimension of the second signal data is expanded by L times as compared to the dimension of the first signal data, and a dimension of the second sensing data is expanded by L times as compared to the dimension of the first sensing data.

For example, assuming that the data window length L corresponding to a stage of detection processing is equal to 96 (representing 96 symbols), sensing processing is performed on first signal data on a first symbol to obtain first sensing data corresponding to the first symbol, and similarly, first signal data and first sensing data corresponding to a second symbol, a third symbol, ..., and a $96^{th}$ symbol can be obtained. The first signal data and the first sensing data corresponding to the 96 symbols are aggregated to obtain corresponding second signal data and second sensing data.

It should be understood that each stage of detection processing corresponding to a different data window length. In practical applications, the data window length corresponding to each stage of detection processing may be adjusted according to actual needs, such that the time granularity corresponding to the detection result of each stage of detection processing is flexibly adjusted.

In a step of S123, an interference detection result is obtained according to the second signal data and the second sensing data.

For each stage of detection processing, interference detection is performed according to the second signal data and the second sensing data, and a corresponding interference detection result is outputted.

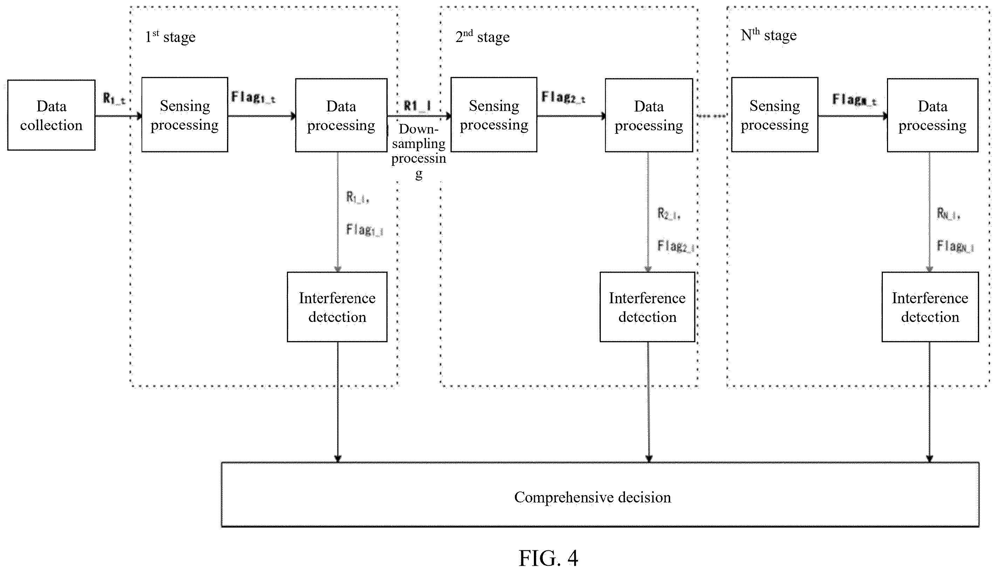

FIG. 4 is a diagram of a multi-stage interference detection processing architecture according to an embodiment of the present disclosure. In the example of FIG. 4, N stages of detection processing are set, and each stage of interference detection processing includes sensing processing, data processing, and interference detection processes.

A description is given using an $x^{th}$ stage of detection processing as an example.

When x=1, first signal data $R_{x\_t}$ inputted to the $x^{th}$ stage of detection processing is collected RB signal data. Sensing processing is performed on $R_{x\_t}$ to obtain first sensing data $Flag_{x\_t}$, and then $R_{x\_t}$ and $Flag_{x\_t}$ of a same length are stored and maintained, with a data window length of L, to obtain second signal data $R_{x\_1}$ and second sensing data $Flag_{x\_1}$. Interference detection is performed according to $R_{x\_1}$ and $Flag_{x\_1}$ to obtain an interference detection result of the $x^{th}$ stage of detection processing. The interference detection result is outputted to a comprehensive detection module. Down-sampling processing is performed on $R_{x\_1}$, and data obtained by the down-sampling processing is outputted to an $(x+1)^{th}$ stage of detection processing.

When x=2, 3, ..., N-1, first signal data $R_{x\_1}$ inputted to the $x^{th}$ stage of detection processing is data obtained by performing down-sampling processing on $R_{x-1\_1}$ obtained by an $(x-1)^{th}$ stage of detection processing. Sensing processing is performed on $R_{x\_t}$ to obtain first sensing data $Flag_{x\_t}$, and then $R_{x\_t}$ and $Flag_{x\_t}$ of a same length are stored and maintained, with a data window length of L, to obtain second signal data $R_{x\_1}$ and second sensing data $Flag_{x\_1}$. Interference detection is performed according to $R_{x\_1}$ and $Flag_{x\_1}$ to obtain an interference detection result of the $x^{th}$ stage of detection processing. The interference detection result is outputted to a comprehensive detection module. Down-sampling processing is performed on $R_{x\_1}$, and data obtained by the down-sampling processing is outputted to an $(x+1)^{th}$ stage of detection processing.

When x=N, first signal data $R_{x\_t}$ inputted to the $x^{th}$ stage of detection processing is data obtained by performing down-sampling processing on $R_{x-1\_1}$ obtained by an $(x-1)^{th}$ stage of detection processing. Sensing processing is performed on $R_{x\_t}$ to obtain first sensing data $Flag_{x\_t}$, and then $R_{x\_t}$ and $Flag_{x\_t}$ of a same length are stored and maintained, with a data window length of L, to obtain second signal data $R_{x\_1}$ and second sensing data $Flag_{x\_1}$. Interference detection is performed according to $R_{x\_1}$ and $Flag_{x\_1}$ to obtain an interference detection result of the $x^{th}$ stage of detection processing. The interference detection result is outputted to a comprehensive detection module.

In some examples, the interference detection result of each stage includes interference category information and interference location information. The interference category information indicates a category of interference, and the interference location information indicates a location where the interference occurs.

In the scheme of the embodiment of the present disclosure, interference detection is performed based on signal data and sensing data in each stage of detection processing, such that a more accurate result can be obtained in each stage of detection processing. Finally, the interference detection results obtained by the stages of detection processing constitute a multi-stage interference detection result described in the embodiments of the present disclosure.

In a step of S130, a comprehensive interference detection result is obtained according to the interference detection results of the plurality of stages.

In the embodiment of the present disclosure, whether interference exists is comprehensively determined according to the interference detection results obtained by the stages of detection processing, and a comprehensive interference detection result is outputted.

For the interference detection result of each of the plurality of stages, when the interference detection result includes interference category information and interference location information, it is determined that interference exists at a time granularity corresponding to the interference detection result.

If there is no explicit interference category information or interference location information in the interference detection result, whether interference exists needs to be comprehensively determined based on other time domain laws and frequency domain positions.

In the embodiments of the present disclosure, a multi-stage detection processing architecture is used, and the scale of the architecture can be flexibly configured in practical applications. Because data used for each stage of detection processing is based on collected data or data obtained by down-sampling processing in a previous stage, the result of each stage of detection processing can reflect a detection result of a different time granularity, thereby improving the accuracy of the interference measurement result.

It should be understood that the signal data of the RB described in the embodiments of the present disclosure includes an RSSI of the RB or a covariance matrix of the RB. Of course, the signal data of the RB may also be other data of the RB, which will not be detailed in the embodiments of the present disclosure.

The scheme of the embodiment of the present disclosure will be further described in detail below using an example where the signal data is an RSSI.

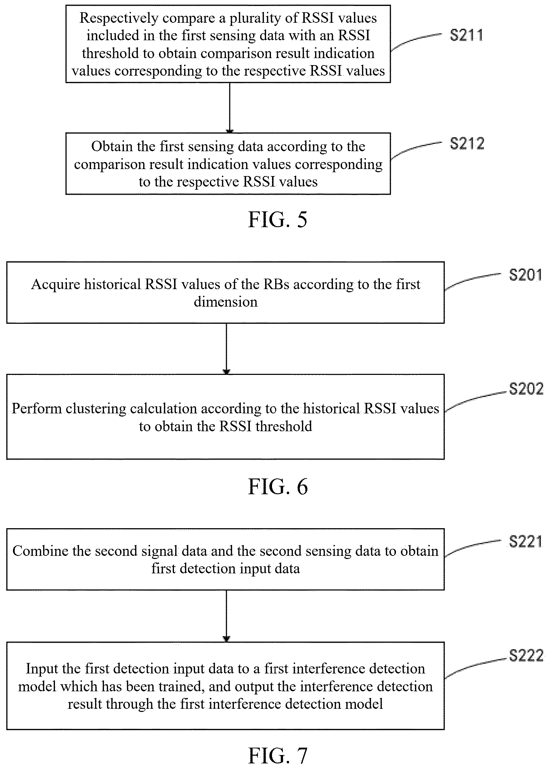

As shown in FIG. 5, when the signal data is an RSSI, performing sensing processing according to first signal data to obtain first sensing data in the embodiment of the present disclosure includes the following steps.

In a step of S211, a plurality of RSSI values included in the first sensing data are respectively compared with an RSSI threshold to obtain comparison result indication values corresponding to the respective RSSI values.

It can be understood that the first sensing data includes RSSI values corresponding to a plurality of RBs, and the RSSI value corresponding to each RB is respectively compared with a preset RSSI threshold to obtain a comparison result indication value corresponding to the RSSI value. For example, when the RSSI value is greater than the RSSI threshold, the comparison result indication value corresponding to the RSSI value is set to 1. When the RSSI value is less than or equal to the RSSI threshold, the comparison result indication value corresponding to the RSSI value is set to 0.

In a step of S212, the first sensing data is obtained according to the comparison result indication values corresponding to the respective RSSI values.

In some examples, the comparison result indication values corresponding to all the RSSI values may be aggregated to obtain the corresponding first sensing data.

As shown in FIG. 6, before respectively comparing a plurality of RSSI values included in the first sensing data with an RSSI threshold, the method further includes the following steps.

In a step of S201, historical RSSI values of the RBs are acquired according to the first dimension.

In a step of S202, clustering calculation is performed according to the historical RSSI values to obtain the RSSI threshold.

RSSI values of RBs collected at a plurality of historical moments may be acquired, and the RSSI values of the RBs at each historical moment satisfy a requirement of the first dimension. For example, at a bandwidth of 100 MHz, RSSI values of 273 RBs collected on historical symbols a1, a2, ... are acquired, and dimensions of the RSSI values of the RBs on each historical symbol are 273*1 (i.e., the first dimension). Then, clustering calculation is performed on all the collected historical RSSI values to obtain a clustering result, an RSSI threshold for determining whether interference occurs is determined according to the clustering result, and the RSSI threshold is used in S210.

As shown in FIG. 7, when the signal data is an RSSI, obtaining an interference detection result according to the second signal data and the second sensing data in the embodiment of the present disclosure includes the following steps.

In a step of S221, the second signal data and the second sensing data are combined to obtain first detection input data.

In a step of S222, the first detection input data is inputted to a first interference detection model which has been trained, and the interference detection result is outputted through the first interference detection model.

It can be understood that the second signal data described herein is obtained by aggregating a plurality of RSSIs of the first dimension, the second sensing data described herein is obtained by aggregating a plurality of pieces of first sensing data of the first dimension, and both the second signal data and the second sensing data are of a second dimension, which is determined by the data window length and is greater than the first dimension.

After the second signal data and the second sensing data are obtained, the second signal data and the second sensing data are combined to obtain the first detection input data. The pre-trained first interference detection model performs detection on the first detection input data to output a corresponding interference detection result.

It should be noted that the first interference detection model used in the embodiments of the present disclosure may be a neural network. The neural network may be one or more of a convolutional neural network, a Back Propagation (BP) neural network, and a deep neural network, or may be other neural networks. The type of the first interference detection model is not particularly limited in the embodiments of the present disclosure.

It should be understood that when the signal data is an RSSI, the down-sampling processing described in the embodiment of the present disclosure may include: performing averaging on the second signal data according to the data window length to obtain the first signal data.

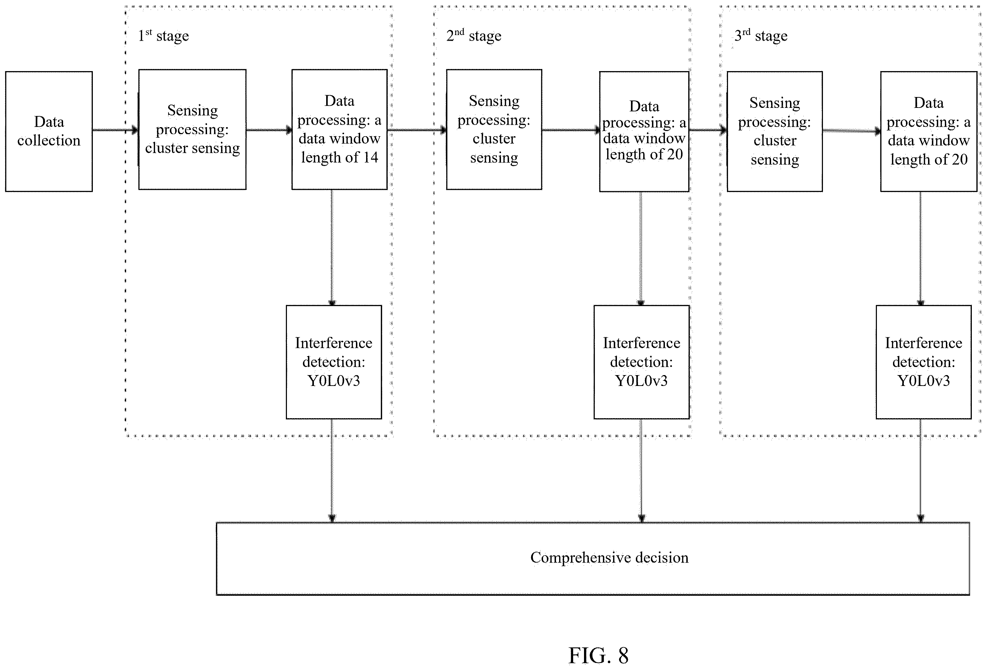

FIG. 8 is a schematic flowchart of interference detection processing when signal data is an RSSI according to an embodiment of the present disclosure, including the following steps.

In a step of S301, RSSI values $RSSI_{1\text{ - symbol}}$ of 273 RBs on each symbol are collected, where a dimension of $RSSI_{1\text{ - symbol}}$ is 273*1, and $symbol = 0,1,2,....$

In a step of S302, the collected $RSSI_{1\text{ - symbol}}$ is compared with a preset interference threshold Thr to determine whether the RSSI values of the 273 RBs in the $RSSI_{1\text{ - symbol}}$ are greater than Thr. If the RSSI value of an RB is greater than Thr, a determination result corresponding to the RB is set to 1; otherwise, the determination result is set to 0. Finally, determination results $FLAG_{1\text{ - symbol}}$ of all RBs on the symbol can be obtained, where a dimension of $FLAG_{1\text{ - symbol}}$ is 273*1.

In a step of S303, $RSSI_{1\text{ - symbol}}$ and $FLAG_{1\text{ - symbol}}$ of a same length are stored and maintained, with a maintenance window length (i.e., data window length) of 14 symbols, to correspondingly obtain $RSSI_{I1}$ and $FLAG_{I1}$, where a dimension of $RSSI_{I1}$ is 273*14, and a dimension of $FLAG_{I1}$ is 273*14.

In a step of S304, $RSSI_{I1}$ and $FLAG_{I1}$ are combined into $DATA_{I1}$, where a dimension of $DATA_{I1}$ is 546*14.

In a step of S305, $DATA_{I1}$ is inputted into a pre-trained first YOLOv3 model, for the first YOLOv3 model to output an interference category and an interference location detected in a first stage of detection processing, where the interference category and the interference location are used as an interference detection result of the first stage.

In a step of S306, a next stage of detection processing can be performed only when down-sampling processing has been performed on $RSSI_{I1}$ obtained in S303. The down-sampling processing is implemented through intra-window averaging, i.e., $RSSI_{I1}$ is averaged to obtain $RSSI_{2\text{ - symbol}}$, where a dimension of $RSSI_{2\text{ - symbol}}$ is 273*1.

In a step of S307, $RSSI_{2\text{ - symbol}}$ is compared with the preset interference threshold Thr to determine whether the RSSI values of the 273 RBs in $RSSI_{2\text{ - symbol}}$ are greater than Thr. If the RSSI value of an RB is greater than Thr, a determination result corresponding to the RB is set to 1; otherwise, the determination result is set to 0. Finally, determination results $FLAG_{2\text{ - symbol}}$ of all RBs on the symbol can be obtained, where a dimension of $FLAG_{2\text{ - symbol}}$ is 273*1.

In a step of S308, $RSSI_{2\text{ - symbol}}$ and $FLAG_{2\text{ - symbol}}$ of a same length are stored and maintained, with a data window length of 20 symbols (which may represent one subframe), to correspondingly obtain $RSSI_{I2}$ and $FLAG_{I2}$, where a dimension of $RSSI_{I2}$ is 273*20, and a dimension of $FLAG_{I2}$ is 273*20.

In a step of S309, $RSSI_{I2}$ and $FLAG_{I2}$ are combined into $DATA_{I2}$, where a dimension of $DATA_{I2}$ is 546*20.

In a step of S310, $DATA_{I2}$ is inputted into a pre-trained second YOLOv3 model, for the second YOLOv3 model to output an interference category and an interference location detected in a second stage of detection processing, where the interference category and the interference location are used as an interference detection result of the second stage.

In a step of S311, a next stage of detection processing can be performed only when down-sampling processing has been performed on $RSSI_{I2}$ obtained in S308. The down-sampling processing is implemented through intra-window averaging, i.e., $RSSI_{I2}$ is averaged to obtain $RSSI_{3\text{ - symbol}}$, where a dimension of $RSSI_{3\text{ - symbol}}$ is 273*1.

In a step of S312, $RSSI_{3\text{ - symbol}}$ is compared with the preset interference threshold Thr to determine whether the RSSI values of the 273 RBs in $RSSI_{3\text{ - symbol}}$ are greater than Thr. If the RSSI value of an RB is greater than Thr, a determination result corresponding to the RB is set to 1; otherwise, the determination result is set to 0. Finally, determination results $FLAG_{3\text{ - symbol}}$ of all RBs on the symbol can be obtained, where a dimension of $FLAG_{3\text{ - symbol}}$

is 273*1.

In a step of S313, $RSSI_{3 - symbol}$ and $FLAG_{3 - symbol}$ of a same length are stored and maintained, with a data window length of 10 symbols (which may represent one radio frame), to correspondingly obtain $RSSI_{I3}$ and $FLAG_{I3}$, where a dimension of $RSSI_{I3}$ is 273*10, and a dimension of $FLAG_{I3}$ is 273*10.

In a step of S314, $RSSI_{I3}$ and $FLAG_{I3}$ are combined into $DATA_{I3}$, where a dimension of $DATA_{I3}$ is 546*10.

In a step of S315, $DATA_{I3}$ is inputted into a pre-trained third YOLOv3 model, for the third YOLOv3 model to output an interference category and an interference location detected in a third stage of detection processing, where the interference category and the interference location are used as an interference detection result of the third stage.

In a step of S316, a comprehensive decision is made according to the interference detection results of the first stage, the second stage, and the third stage, and a comprehensive interference detection result is outputted.

In the example of FIG. 8, in each stage of detection processing, sensing data is obtained by cluster sensing, and the interference detection result is obtained using the YOLOv3 model.

The scheme of the embodiment of the present disclosure will be further described in detail below using an example where the signal data is a covariance matrix.

It should be understood that the covariance matrix of the RB may be expressed by the following formula:

$$R_x = \frac{1}{N} \sum_{n=0}^{N-1} \text{data}_x * \text{conj}\big(\text{data}_x\big)^T$$

where $data_x = \{data_x^0, data_x^1, data_x^2, \ldots data_x^{N-1}\}^T$.

In the above formula, N represents the number of receiving antennas; $\text{data}_x^n$ represents a received signal obtained by an $n^{th}$ receiving antenna on an $x^{th}$ RB; n=0, 1, ..., N-1; at a bandwidth of 100 MHz, x=1, 2, ..., 273; and $\{\}^T$ represents a transpose of the matrix.

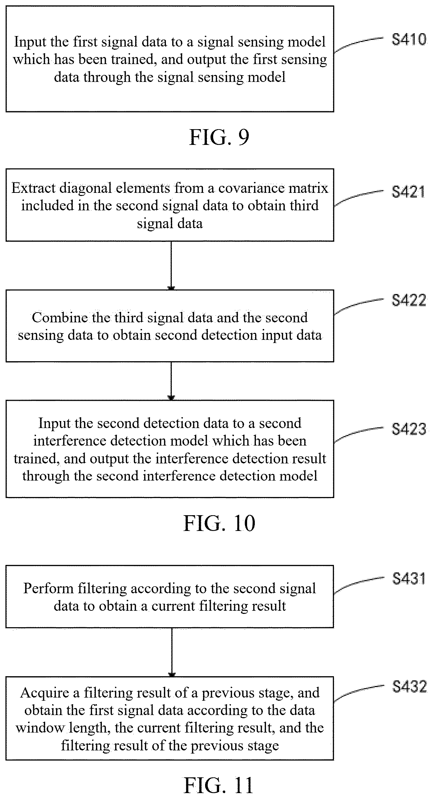

As shown in FIG. 9, when the signal data is a covariance matrix, performing sensing processing according to first signal data to obtain first sensing data in the embodiment of the present disclosure includes a following step.

In a step of S410, the first signal data is inputted to a signal sensing model which has been trained, and the first sensing data is outputted through the signal sensing model.

It should be noted that the signal sensing model used in the embodiments of the present disclosure may be a neural network. The neural network may be one or more of a convolutional neural network, a BP neural network, and a deep neural network, or may be other neural networks. The type of the signal sensing model is not particularly limited in the embodiments of the present disclosure.

It can be understood that the first sensing data includes at least one of: whether energy is present, a horizontal angle, and a pitch angle.

The first signal data is inputted into the signal sensing model, for the signal sensing model to predict whether energy is present in the RB, predict a horizontal angle of the signal, and predict a pitch angle of the signal, and output corresponding first sensing data.

As shown in FIG. 10, when the signal data is a covariance matrix, obtaining an interference detection result according to the second signal data and the second sensing data in the embodiment of the present disclosure includes the following steps.

In a step of S421, diagonal elements are extracted from a covariance matrix included in the second signal data to obtain third signal data.

In a step of S422, the third signal data and the second sensing data are combined to obtain second detection input data.

In a step of S423, the second detection input data is inputted to a second interference detection model which has been trained, and the interference detection result is outputted through the second interference detection model.

It can be understood that the second signal data described herein is obtained by aggregating a plurality of covariance matrices of the first dimension, the second sensing data described herein is obtained by aggregating a plurality of pieces of first sensing data of the first dimension, and both the second signal data and the second sensing data are of a second dimension, which is determined by the data window length and is greater than the first dimension.

In the embodiment of the present disclosure, diagonal elements are first extracted from a covariance matrix included in the second signal data, and the extracted diagonal elements are formed into third signal data. In other words, not all the covariance matrices are combined with the second sensing data. As such, the scale of the input data of the second interference detection model can be reduced, thereby improving the processing efficiency.

It should be noted that the second interference detection model used in the embodiments of the present disclosure may be a neural network. The neural network may be one or more of a convolutional neural network, a BP neural network, and a deep neural network, or may be other neural networks. The type of the second interference detection model is not particularly limited in the embodiments of the present disclosure.

As shown in FIG. 11, when the signal data is a covariance matrix, the down-sampling processing includes the following steps.

In a step of S431, filtering is performed according to the second signal data to obtain a current filtering result.

In a step of S432, a filtering result of a previous stage is acquired, and the first signal data is obtained according to the data window length, the current filtering result, and the filtering result of the previous stage.

In some examples, the filtering of the data may be clipping filtering, median filtering, etc.

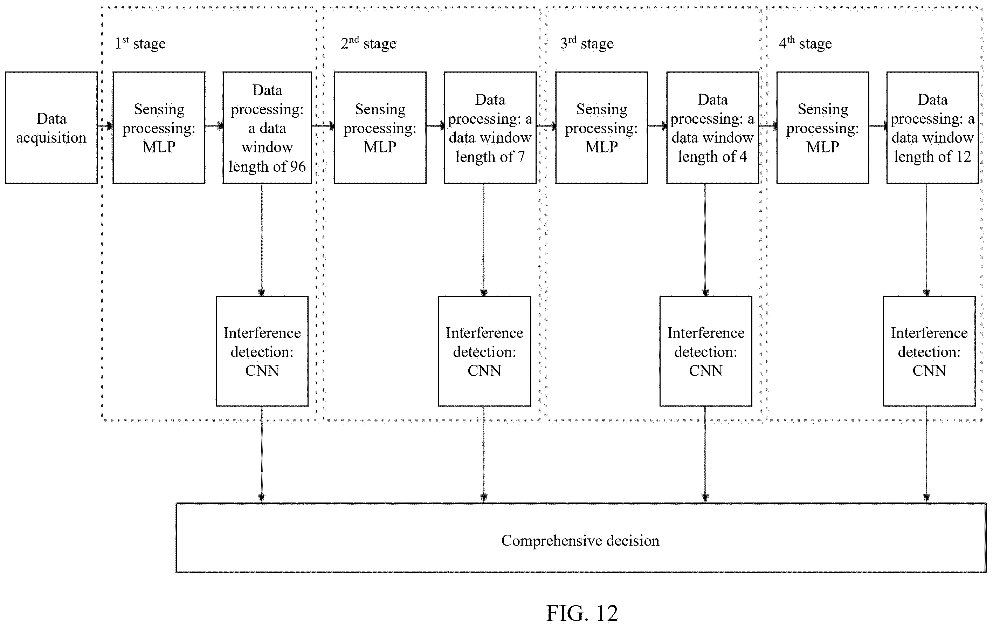

FIG. 12 is a schematic flowchart of interference detection processing when signal data is a covariance matrix according to an embodiment of the present disclosure, including the following steps.

In a step of S501, covariance matrices $R_{1\text{-}t}$ of 273 RBs are collected at a time internal of 15 minutes, where a dimension of $R_{1\text{-}t}$ is 273*n*n, and n represents the number of receiving antennas.

In a step of S502, $R_{1\text{-}t}$ is inputted into a pre-trained first Multi-layer perceptron (MLP) network, for the first MLP network to sense the inputted data, and output a sensing result of the 273 RBs, where the sensing result includes whether energy is present, a horizontal angle, and a pitch angle, and is defined as $FLAG_{1\text{-}t}$, and a dimension of $FLAG_{1\text{-}t}$ is 273*3.

In a step of S503, $R_{1\text{-}t}$ and $FLAG_{1\text{-}t}$ of a same window length are stored and maintained, to correspondingly obtain $R_{l1}$ and $FLAG_{l1}$, where the data window length is set to 96 (indicating 96 symbols), a dimension of $R_{l1}$ is 273*96*n*n, and a dimension of $FLAG_{l1}$ is 273*96*3.

In a step of S504, main diagonal elements are extracted from 273*n*n in $R_{l1}$ to obtain $R'_{l1}$, where a dimension of $R'_{l1}$ is 273*96*1; and $R'_{l1}$ and $FLAG_{l1}$ are combined to form $DATA_{l1}$, where a dimension of $DATA_{l1}$ is 546*96*4.

In a step of S505, $DATA_{l1}$ is inputted into a pre-trained first Convolutional Neural Networks (CNN) model to obtain an interference category and an interference location of a first stage of detection processing.

In a step of S506, a next stage of detection processing can be performed only when down-sampling processing has been performed on $R_{l1}$ obtained in S503. The down-sampling processing is implemented through intra-window filtering, which is expressed by the following formula $R_{2\text{-}t} = 0.9*R_{2\text{-}t} + 0.1*R'_{2\text{-}t}$, where $R_{2\text{-}t}$ represents a result of the current filtering, and $R'_{2\text{-}t}$ represents a result of the previous filtering. Finally, $R_{l1}$ is filtered to obtain $R_{2\text{-}t}$, where a dimension of $R_{2\text{-}t}$ is 273*n*n.

In a step of S507, $R_{2\text{-}t}$ is inputted into a pre-trained second MLP network, for the second MLP network to sense the inputted data, and output a sensing result of 273 RBs, where the sensing result includes whether energy is present, a horizontal angle, and a pitch angle, and is defined as $FLAG_{2\text{-}t}$, and a dimension of $FLAG_{2\text{-}t}$ is 273*3.

In a step of S508, $R_{2\_t}$ and $FLAG_{2\text{-}t}$ of a same window length are stored and maintained, to correspondingly obtain $R_{l2}$ and $FLAG_{l2}$, where the data window length is set to 7 (which may represent one day), a dimension of $R_{l2}$ is 273*7*n*n, and a dimension of $FLAG_{2\text{-}t}$ is 273*7*3.

In a step of S509, main diagonal elements are extracted from 273*n*n in $R_{l2}$ to obtain $R'_{l2}$, where a dimension of $R'_{l2}$ is 273*7*1; and $R'_{l2}$ and $FLAG_{2\text{-}t}$ are combined to form $DATA_{l2}$, where a dimension of $DATA_{l2}$ is 546*7*4.

In a step of S510, $DATA_{l2}$ is inputted into a pre-trained second CNN model to obtain an interference category and an interference location of a second stage of detection processing.

In a step of S511, a next stage of detection processing can be performed only when down-sampling processing has been performed on $R_{l2}$ obtained in S508. The down-sampling processing is implemented through intra-window filtering, which is expressed by the following formula $R_{3\text{-}t} = 0.9 * R_{3\text{-}t} + 0.1 * R'_{3\text{-}t}$, where $R_{3\text{-}t}$ represents a result of the current filtering, and $R'_{3\text{-}t}$ represents a result of the previous filtering. Finally, $R_{l2}$ is filtered to obtain $R_{3\text{-}t}$, where a dimension of $R_{3\text{-}t}$ is 273*n*n.

In a step of S512, $R_{3\text{-}t}$ is inputted into a pre-trained third MLP network, for the third MLP network to sense the inputted data, and output a sensing result of the 273 RBs, where the sensing result includes whether energy is present, a horizontal angle, and a pitch angle, and is defined as $FLAG_{3\text{-}t}$, and a dimension of $FLAG_{3\text{-}t}$ is 273*3.

In a step of S513, $R_{3\text{-}t}$ and $FLAG_{3\text{-}t}$ of a same window length are stored and maintained, to correspondingly obtain $R_{l3}$ and $FLAG_{l3}$, where the data window length is set to 4 (which may represent one week), a dimension of $R_{l3}$ is 273*4*n*n, and a dimension of $FLAG_{l3}$ is 273*4*3.

In a step of S514, main diagonal elements are extracted from 273*n*n in $R_{l3}$ to obtain $R'_{l3}$, where a dimension of

$R'_{l3}$ is 273*4*1; and $R'_{l3}$ and $FLAG_{l3}$ are combined to form $DATA_{l3}$, where a dimension of $DATA_{l3}$ is 546*4*4.

In a step of S515, $DATA_{l3}$ is inputted into a pre-trained third CNN model to obtain an interference category and an interference location of a third stage of detection processing.

In a step of S516, a next stage of detection processing can be performed only when down-sampling processing has been performed on $R_{l3}$ obtained in S513. The down-sampling processing is implemented through intra-window filtering, which is expressed by the following formula $R_{4\_t} = 0.9 * R_{4-t} + 0.1 * R'_{4-t}$, where $R_{4-t}$ represents a result of the current filtering, and $R'_{4-t}$ represents a result of the previous filtering. Finally, $R_{l3}$ is filtered to obtain $R_{4-t}$, where a dimension of $R_{4-t}$ is 273*n*n.

In a step of S517, $R_{4-t}$ is inputted into a pre-trained fourth MLP network, for the fourth MLP network to sense the inputted data, and output a sensing result of the 273 RBs, where the sensing result includes whether energy is present, a horizontal angle, and a pitch angle, and is defined as $FLAG_{4-t}$, and a dimension of $FLAG_{4-t}$ is 273*3.

In a step of S518, $R_{4-t}$ and $FLAG_{4-t}$ of a same window length are stored and maintained, to correspondingly obtain $R_{l4}$ and $FLAG_{l4}$, where the data window length is set to 12 (which may represent one month), a dimension of $R_{l4}$ is 273*12*n*n, and a dimension of $FLAG_{l4}$ is 273*12*3.

In a step of S519, main diagonal elements are extracted from 273*n*n in $R_{l4}$ to obtain $R'_{l4}$, where a dimension of $R'_{l4}$ is 273*12*1; and $R'_{l4}$ and $FLAG_{l4}$ are combined to form $DATA_{l4}$, where a dimension of $DATA_{l4}$ is 546*12*4.

In a step of S520, $DATA_{l4}$ is inputted into a pre-trained fourth CNN model to obtain an interference category and an interference location of a fourth stage of detection processing.

In a step of S521, a comprehensive decision is made according to the interference detection results of the first stage, the second stage, the third stage, and the fourth stage, and a comprehensive interference detection result is outputted.

In the example of FIG. 12, in each stage of detection processing, sensing data is obtained by MLP network sensing, and the interference detection result is obtained using a CNN model.

It can be understood that although the steps in the embodiments of the present disclosure are described in a particular order in the drawings, it should not be construed as requiring that these steps be performed in a particular or sequential order as shown, or that all of the illustrated steps be performed to achieve a desired result. In a particular environment, multitasking and parallel processing may be advantageous.

The embodiments of the present disclosure propose a novel multi-stage interference detection method, the main objective of which is to more flexibly and accurately detect types of interference in a wireless environment. The main technical features of the embodiments of the present disclosure are as follows. According to actual needs, the architecture of the detection unit can be flexibly configured, including detection scale, model selection, and multiple detection methods. Interference in different dimensions can be detected, and three dimensions including spatial domain, time domain, and frequency domain are supported. Through the deployment of a multi-stage time granularity model and by the method of combining data with determination results, interference detection is respectively performed at different time granularities, and detection results of the stages are given.

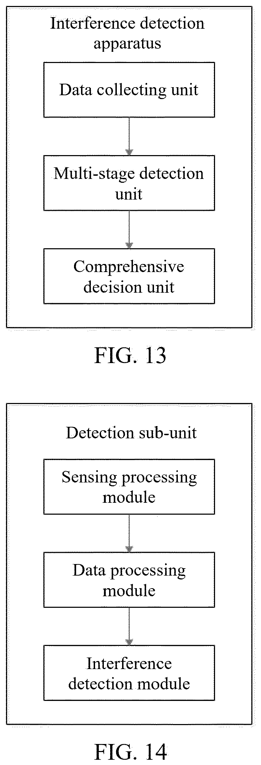

As shown in FIG. 13, an embodiment of the present disclosure provides an interference detection apparatus, including:

a data collecting unit, configured for collecting signal data of an RB according to a preset time interval and a first dimension;

a multi-stage detection unit, configured for performing a plurality of stages of detection processing according to the signal data to obtain interference detection results of the plurality of stages; and

a comprehensive decision unit, configured for obtaining a comprehensive interference detection result according to the interference detection results of the plurality of stages,

where the multi-stage detection unit includes N stages of detection sub-units, N is an integer greater than 1. Each of the N stages of detection sub-units is further configured for: performing sensing processing according to first signal data to obtain first sensing data, where the first signal data is obtained according to the collected signal data or by performing down-sampling processing on second signal data obtained by a previous stage of detection processing; performing aggregation processing on a plurality of pieces of first signal data and a plurality of pieces of first sensing data corresponding to the plurality of pieces of first signal data according to a data window length to obtain second signal data and second sensing data; and obtaining an interference detection result according to the second signal data and the second sensing data.

FIG. 14 is a schematic structural diagram of a detection sub-unit according to an embodiment of the present disclosure. Each stage of detection sub-unit includes:

a sensing processing module, configured for performing sensing processing according to first signal data to obtain first sensing data;

a data processing module, configured for performing aggregation processing on a plurality of pieces of first signal data and a plurality of pieces of first sensing data corresponding to the plurality of pieces of first signal data according to a data window length to obtain second signal data and second sensing data; and

an interference detection module, configured for obtaining an interference detection result according to the second signal data and the second sensing data.

In the several embodiments provided in the present disclosure, it is to be understood that the disclosed apparatus and method may be implemented in other manners. For example, the described apparatus embodiments are only illustrative. For example, the division of the modules or units is merely a logical function division and other division manners may be used in practical implementations. For example, a plurality of units or components may be combined or integrated into another apparatus, or some features may be ignored or not performed. In addition, the shown or discussed mutual couplings or direct couplings or communication connections may be implemented through some interfaces. The indirect couplings or communication connections between the apparatus or units may be implemented in electronic, mechanical, or other forms.

It should be noted that the information exchange and execution processes between the apparatus or units are based on the same idea as the method embodiments of the present disclosure. For specific functions and technical effects of the modules, reference may be made to the descriptions in the method embodiments, and the details will not be repeated herein.

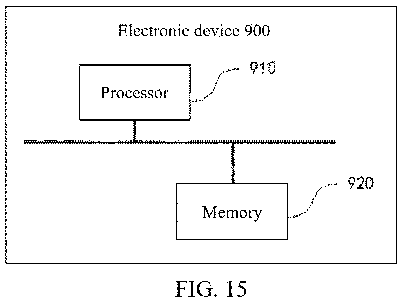

As shown in FIG. 15, an embodiment of the present disclosure provides an electronic device 900, including, but not limited to,

a processor 910 and a memory 920.

The memory 920 stores program instructions which, when executed by the processor 910, cause the processor 910 to perform the interference detection method according to any one of the above embodiments.

The processor 910 and the memory 920 may be connected by a bus or in other ways.

It can be understood that the processor 910 may be a Central Processing Unit (CPU). The processor may also be other general-purpose processor, a Digital Signal Processor (DSP), an Application-Specific Integrated Circuit (ASIC), a Field Programmable Gate Array (FPGA), or other programmable logic device, discrete gate or transistor logic device, discrete hardware component, or the like. The general-purpose processor may be a microprocessor or any conventional processor or the like. Alternatively, the processor 910 uses one or more integrated circuits for executing related programs to implement the technical schemes provided in the embodiments of the present disclosure.

The memory 920, as a non-transitory computer-readable storage medium, may be configured for storing a non-transitory software program and a non-transitory computer-executable program, for example, the interference detection method according to any one of the embodiments of the present disclosure. The processor 910 runs the non-transitory software program and the non-transitory computer-executable program stored in the memory 920, to implement the interference detection method.

The memory 920 may include a program storage area and a data storage area. The program storage area may store an operating system, and an application required by at least one function. The data storage area may store data and the like required for executing the interference detection method or the method for training a spectrum sensing model. In addition, the memory 920 may include a high-speed random access memory, and may also include a non-transitory memory, e.g., at least one magnetic disk storage device, flash memory device, or other non-transitory solid-state storage device. In some implementations, the memory 920 optionally includes memories located remotely from the processor 910, and the remote memories may be connected to the processor 910 via a network. Examples of the network include, but not limited to, the Internet, an intranet, a local area network, a mobile communication network, and combinations thereof.

The non-transitory software program and instructions required to implement the interference detection method are stored in the memory 920 which, when executed by one or more processors 910, cause the one or more processors 910 to implement the interference detection method according to any one of the embodiments of the present disclosure.

An embodiment of the present disclosure provides a computer-readable storage medium, storing program instructions which, when executed by a computer, cause the computer to perform the interference detection method according to any one of the above embodiments.

The computer-readable storage medium in the embodiment of the present disclosure may be any combination of one or more computer-readable media. The computer-readable medium may be a computer-readable signal medium or a computer-readable storage medium. For example, the computer-readable storage medium may include, but not limited to, an electrical, magnetic, optical, electromagnetic, infrared, or semiconductor system, apparatus, or device, or any combination thereof. Specific examples (non-exclusive list) of the computer-readable storage medium include: an electrical connection having one or more wires, a portable computer disk, a hard disk, a Random Access Memory (RAM), a Read-Only Memory (ROM), an erasable programmable Read-Only Memory (EPROM), a flash memory, an optical fiber, a portable Compact Disc Read-Only Memory (CD-ROM), an optical storage device, a magnetic storage device, or any suitable combination thereof. In the present disclosure, the computer-readable storage medium may be any tangible medium containing or storing a program that may be used by or in combination with an instruction execution system, apparatus, or device.

The computer-readable signal medium may include a data signal propagated in a baseband or as part of a carrier. The data signal carries computer-readable program code. Such a propagated data signal may be in a variety of forms including, but not limited to, an electromagnetic signal, an optical signal, or any suitable combination thereof. The computer-readable signal medium may also be any computer-readable medium other than a computer-readable storage medium, and may send, propagate, or transmit a program for use by or in combination with an instruction execution system, apparatus, or device.

The program code contained on the computer-readable medium may be transmitted using any suitable medium, including but not limited to, via wireless transmission, via a wire, via a fiber optic cable, via Radio Frequency (RF), etc., or any suitable combination thereof.

Computer program code for executing the steps of the present disclosure may be compiled in one or more programming languages or a combination of programming languages, including object-oriented programming languages such as Java, Smalltalk, and C++, and conventional procedural programming languages such as the "C" language or similar programming languages. The program code can be entirely executed on a user's computer, partly executed on the user's computer, executed as a separate software package, partly executed on the user's computer and partly executed on a remote computer, or entirely executed on a remote computer or server. In cases involving a remote computer, the remote computer may be connected to the user's computer via any type of network, including a Local Area Network (LAN) or a Wide Area Network (WAN), or may be connected to an external computer (e.g., via an Internet service provided by an Internet service provider).

An embodiment of the present disclosure provides a computer program product, storing computer instructions which, when executed by a computer, cause the computer to perform the interference detection method according to any one of the above embodiments.

Although some embodiments of the present disclosure have been described above, the present disclosure is not limited to the implementations described above. Those having ordinary skills in the art can make various equivalent modifications or replacements without departing from the scope of the present disclosure. Such equivalent modifications or replacements fall within the scope defined by the claims of the present disclosure.

**Claims**

1. An interference detection method, comprising:

   collecting signal data of a Resource Block (RB) according to a preset time interval and a first dimension;
   performing a plurality of stages of detection processing according to the signal data to obtain interference detection results of the plurality of stages; and
   obtaining a comprehensive interference detection result according to the interference detection results of the plurality of stages,
   wherein the plurality of stages of detection processing comprise:

   performing sensing processing according to first signal data to obtain first sensing data, wherein the first signal data is obtained according to the collected signal data or by performing down-sampling processing on second signal data obtained by a previous stage of detection processing;
   performing aggregation processing on a plurality of pieces of first signal data and a plurality of pieces of first sensing data corresponding to the plurality of pieces of first signal data according to a data window length to obtain second signal data and second sensing data; and
   obtaining an interference detection result according to the second signal data and the second sensing data.

2. The method of claim 1, wherein the signal data is a Received Signal Strength Indicator (RSSI) of the RB.

3. The method of claim 2, wherein performing sensing processing according to first signal data to obtain first sensing data comprises:

respectively comparing a plurality of RSSI values comprised in the first sensing data with an RSSI threshold to obtain comparison result indication values corresponding to the respective RSSI values; and
obtaining the first sensing data according to the comparison result indication values corresponding to the respective RSSI values.

4. The method of claim 3, wherein before respectively comparing a plurality of RSSI values comprised in the first sensing data with an RSSI threshold, the method further comprises:

acquiring historical RSSI values of the RBs according to the first dimension; and
performing clustering calculation according to the historical RSSI values to obtain the RSSI threshold.

5. The method of claim 2, wherein obtaining an interference detection result according to the second signal data and the second sensing data comprises:

combining the second signal data and the second sensing data to obtain first detection input data; and
inputting the first detection input data to a first interference detection model which has been trained, and outputting the interference detection result through the first interference detection model.

6. The method of claim 2, wherein the down-sampling processing comprises: performing averaging on the second signal data according to the data window length to obtain the first signal data.

7. The method of claim 1, wherein the signal data is a covariance matrix of the RB.

8. The method of claim 7, wherein performing sensing processing according to first signal data to obtain first sensing data comprises:
inputting the first signal data to a signal sensing model which has been trained, and outputting the first sensing data through the signal sensing model.

9. The method of claim 8, wherein the first sensing data comprises at least one of: whether energy is present, a horizontal angle, and a pitch angle.

10. The method of claim 8, wherein obtaining an interference detection result according to the second signal data and the second sensing data comprises:

extracting diagonal elements from a covariance matrix comprised in the second signal data to obtain third signal data;
combining the third signal data and the second sensing data to obtain second detection input data; and
inputting the second detection input data to a second interference detection model which has been trained, and outputting the interference detection result through the second interference detection model.

11. The method of claim 7, wherein the down-sampling processing comprises:

performing filtering according to the second signal data to obtain a current filtering result; and
acquiring a filtering result of a previous stage, and obtaining the first signal data according to the data window length, the current filtering result, and the filtering result of the previous stage.

12. The method of claim 1, wherein the interference detection result comprises interference category information and interference location information.

13. The method of claim 1, wherein each of the plurality of stages of detection processing corresponds to a different data window length.

14. The method of claim 1, wherein obtaining a comprehensive interference detection result according to the interference detection results of the plurality of stages comprises:

for the interference detection result of each of the plurality of stages, in response to the interference detection result comprising interference category information and interference location information, determining that interference exists at a time granularity corresponding to the interference detection result.

15. An interference detection apparatus, comprising:

a data collecting unit, configured for collecting signal data of a Resource Block (RB) according to a preset time interval and a first dimension;

a multi-stage detection unit, configured for performing a plurality of stages of detection processing according to the signal data to obtain interference detection results of the plurality of stages; and

a comprehensive decision unit, configured for obtaining a comprehensive interference detection result according to the interference detection results of the plurality of stages,

wherein the multi-stage detection unit comprises N stages of detection sub-units, N is an integer greater than 1, and each of the N stages of detection sub-units is further configured for: performing sensing processing according to first signal data to obtain first sensing data, wherein the first signal data is obtained according to the collected signal data or by performing down-sampling processing on second signal data obtained by a previous stage of detection processing; performing aggregation processing on a plurality of pieces of first signal data and a plurality of pieces of first sensing data corresponding to the plurality of pieces of first signal data according to a data window length to obtain second signal data and second sensing data; and obtaining an interference detection result according to the second signal data and the second sensing data.

16. An electronic device, comprising:

a processor and a memory,

wherein the memory stores program instructions which, when executed by the processor, cause the processor to perform the method of any of claims 1 to 14.

17. A computer-readable storage medium, storing program instructions which, when executed by a computer, cause the computer to perform the method of any of claims 1 to 14.

18. A computer program product, storing computer instructions which, when executed by a computer, cause the computer to perform the method of any of claims 1 to 14.

Communication system

Terminal device

Network device

FIG. 1

Collect signal data of an RB according to a preset time interval and a first dimension ⟋ S110

Perform a plurality of stages of detection processing according to the signal data to obtain interference detection results of the plurality of stages ⟋ S120

Obtain a comprehensive interference detection result according to the interference detection results of the plurality of stages ⟋ S130

FIG. 2

Perform sensing processing according to first signal data to obtain first sensing data — S121

Perform aggregation processing on a plurality of pieces of first signal data and a plurality of pieces of first sensing data corresponding to the plurality of pieces of first signal data according to a data window length to obtain second signal data and second sensing data — S122

Obtain an interference detection result according to the second signal data and the second sensing data — S123

FIG. 3

1st stage

2nd stage

N^th stage

Data collection

$R_{1\_t}$

Sensing processing

$Flag_{1\_t}$

Data processing

$R1\_l$

Down-sampling processing

Sensing processing

$Flag_{2\_t}$

Data processing

Sensing processing

$Flag_{n\_t}$

Data processing

$R_{1\_l}$, $Flag_{1\_l}$

$R_{2\_l}$, $Flag_{2\_l}$

$R_{N\_l}$, $Flag_{N\_l}$

Interference detection

Interference detection

Interference detection

Comprehensive decision

FIG. 4

Respectively compare a plurality of RSSI values included in the first sensing data with an RSSI threshold to obtain comparison result indication values corresponding to the respective RSSI values — S211

Obtain the first sensing data according to the comparison result indication values corresponding to the respective RSSI values — S212

FIG. 5

Acquire historical RSSI values of the RBs according to the first dimension — S201

Perform clustering calculation according to the historical RSSI values to obtain the RSSI threshold — S202

FIG. 6

Combine the second signal data and the second sensing data to obtain first detection input data — S221

Input the first detection input data to a first interference detection model which has been trained, and output the interference detection result through the first interference detection model — S222

FIG. 7

**1st stage**

Data collection → Sensing processing: cluster sensing → Data processing: a data window length of 14

**2nd stage**

Sensing processing: cluster sensing → Data processing: a data window length of 20

**3rd stage**

Sensing processing: cluster sensing → Data processing: a data window length of 20

Interference detection: Y0L0v3

Interference detection: Y0L0v3

Interference detection: Y0L0v3

Comprehensive decision

FIG. 8

Input the first signal data to a signal sensing model which has been trained, and output the first sensing data through the signal sensing model —— S410

FIG. 9

Extract diagonal elements from a covariance matrix included in the second signal data to obtain third signal data —— S421

Combine the third signal data and the second sensing data to obtain second detection input data —— S422

Input the second detection data to a second interference detection model which has been trained, and output the interference detection result through the second interference detection model —— S423

FIG. 10

Perform filtering according to the second signal data to obtain a current filtering result —— S431

Acquire a filtering result of a previous stage, and obtain the first signal data according to the data window length, the current filtering result, and the filtering result of the previous stage —— S432

FIG. 11

FIG. 12

Interference detection
apparatus

Data collecting unit

Multi-stage detection
unit

Comprehensive
decision unit

FIG. 13

Detection sub-unit

Sensing processing
module

Data processing
module

Interference
detection module

FIG. 14

EP 4 531 448 A1

Electronic device 900

Processor — 910

Memory — 920

FIG. 15

24

## INTERNATIONAL SEARCH REPORT

| | International application No. |
|---|---|
| | **PCT/CN2023/105549** |

**A.  CLASSIFICATION OF SUBJECT MATTER**

H04W 24/08(2009.01)i

According to International Patent Classification (IPC) or to both national classification and IPC

**B.  FIELDS SEARCHED**

Minimum documentation searched (classification system followed by classification symbols)

IPC:H04W H04L

Documentation searched other than minimum documentation to the extent that such documents are included in the fields searched

Electronic data base consulted during the international search (name of data base and, where practicable, search terms used)

CNTXT; WOTXT; ENTXTC; DWPI: 干扰, 感知, 模型, 训练, 时间, 周期, 窗, 采集, 降采, 过滤, 级, interference, sensing, model, training, time, period, window, collect, down-sampling, filt+, class, stage

**C.  DOCUMENTS CONSIDERED TO BE RELEVANT**

| Category* | Citation of document, with indication, where appropriate, of the relevant passages | Relevant to claim No. |
|---|---|---|
| A | CN 108200590 A (GUANGZHOU HAIGE COMMUNICATIONS GROUP INCORPORATED COMPANY) 22 June 2018 (2018-06-22)<br>     description, paragraphs 45-69 | 1-18 |
| A | CN 104796363 A (TSINGHUA UNIVERSITY) 22 July 2015 (2015-07-22)<br>     entire document | 1-18 |
| A | CN 110856206 A (FUJITSU LTD.) 28 February 2020 (2020-02-28)<br>     entire document | 1-18 |
| A | CN 113645700 A (CHINA MOBILE COMMUNICATIONS GROUP GUANGDONG CO.,LTD, GUANGZHOU BRANCH) 12 November 2021 (2021-11-12)<br>     entire document | 1-18 |
| A | US 2020153535 A1 (BLUECOM SYSTEMS AND CONSULTING LLC.) 14 May 2020 (2020-05-14)<br>     entire document | 1-18 |

☐ Further documents are listed in the continuation of Box C.          ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **09 August 2023** | **23 August 2023** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/105549**

| Patent document cited in search report | | | Publication date (day/month/year) | Patent family member(s) | Publication date (day/month/year) |
|---|---|---|---|---|---|
| CN | 108200590 | A | 22 June 2018 | None | |
| CN | 104796363 | A | 22 July 2015 | None | |
| CN | 110856206 | A | 28 February 2020 | None | |
| CN | 113645700 | A | 12 November 2021 | None | |
| US | 2020153535 | A1 | 14 May 2020 | None | |

Form PCT/ISA/210 (patent family annex) (July 2022)

**REFERENCES CITED IN THE DESCRIPTION**

**Patent documents cited in the description**

- CN 202210906139